# EUROPEAN PATENT APPLICATION

(11) **EP 0 872 760 A1**
(43) Date of publication of application: **21.10.1998**
(21) Application number: 98201023.3
(22) Date of filing: 01.04.1998
(51) Int. Cl.: G03B 17/24, G11B 5/633, G06K 19/12

(54) **Magnetically coated film with azimuth recorded tracks**

(30) Priority: 18.04.1997 US 844495
(71) Applicant: EASTMAN KODAK COMPANY, Rochester, New York 14650 (US)
(72) Inventor: Jagielinski, Tomasz Mark, c/oEastman Kodak Company, Rochester, New York 14650-2201 (US); Carr, Thomas Daniel, c/o Eastman Kodak Company, Rochester, New York 14650-2201 (US)
(74) Representative: Lewandowsky, Klaus

(57) **Abstract**

In a photographic film (10) having a substantially transparent magnetic layer and having spaced image frame areas (18), the improvement comprising at least one azimuthly recorded magnetic track (52) recorded in the magnetic layer.

## Description

### FIELD OF THE INVENTION

This invention relates in general to photographic systems and relates more particularly to magnetically coated film having azimuth recorded data tracks.

### BACKGROUND OF THE INVENTION

The recent announcement of the Advanced Photography System (APS) has brought a new era to photography. The system centers around a photographic film having a substantially transparent magnetic layer on the non-emulsion side of the film (referred to as the MOF layer). One or more longitudinal recording tracks are provided in the MOF layer between the side edges of the of the image frame area and the film. Information such as film type, film speed, film exposure information, and information relevant to the processing and subsequent use (e.g., printing) of the exposed image frames can be recorded in one or more tracks. Information related to exposure of an image frame can be recorded during camera use. Voice messages and/or sound associated with the photographed scene can also be recorded during camera use.

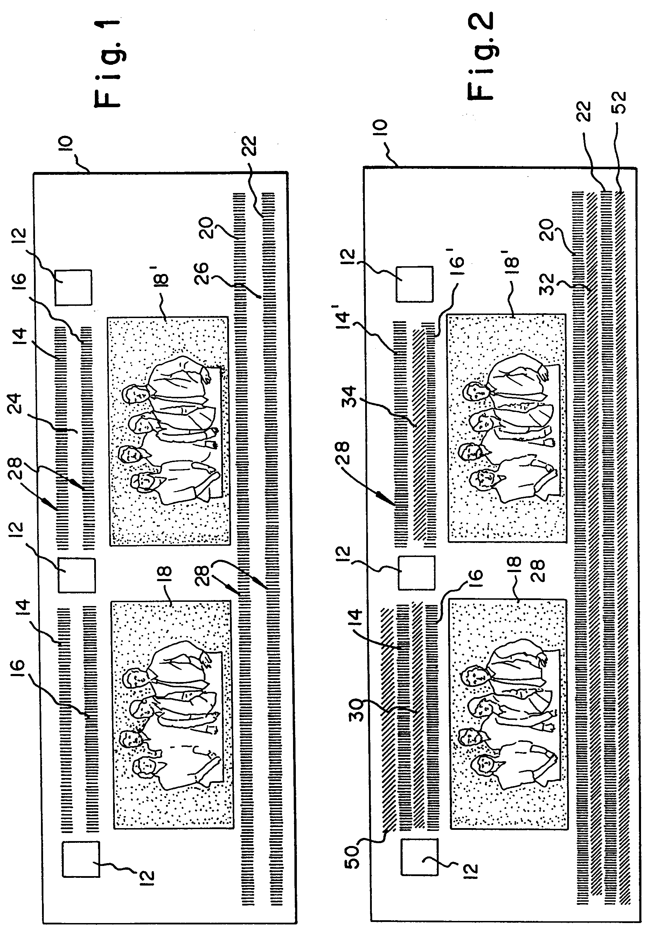

In the APS, the information is magnetically recorded on film in a standardized format that has been agreed to globally by the film and camera manufacturers. (See, for example, U.S. Patent 5,130,745, issued July 14,1992, inventors Cloutier et al.).This format is illustrated in Fig. 1. Film 10 has a series of perforations 12 along one edge only. A first set of longitudinal magnetic tracks 14 and 16 are located between the perforations 12 on one side of image frames 18. A second set of longitudinal magnetic tracks 20 and 22 are located on the other side of frames 18 running along the unperforated edge of film 10. Magnetic tracks 14 and 16 are separated by a longitudinal unrecorded space 24, while magnetic tracks 20 and 22 are separated by a longitudinal unrecorded space 26. The magnetic transitions recorded on tracks 14, 16, 20, and 22 are recorded in non-azimuth recording, where the transitions are recorded perpendicular to the track length (depicted as parallel line segments 28 in Fig. 1). Longitudinal unrecorded spaces 24 and 26 provide sufficient separation between recorded tracks to eliminate crosstalk when they are read out.

The magnetically recorded tracks in the APS format, have relatively low density, resulting in relatively little data being stored. It has been proposed to store additional data in the image frame area, but such tracks are also recorded in non-azimuth format with spacing between tracks. There is thus a need in the APS format to provide additional tracks for recording of additional data to increase data storage without interfering with the performance of the previously recorded tracks. There is a general need in magnetically coated film formats to provide increased data storage.

### SUMMARY OF THE INVENTION

According to the present invention, there is provided a solution to the needs discussed above.

According to a feature of the present invention, there is provided in a photographic film having a substantially transparent magnetic layer and having spaced image frame areas, the improvement comprising at least one azimuthly recorded magnetic track recorded in the magnetic layer.

### ADVANTAGEOUS EFFECT

The present invention has the following advantages, among others.
1. Additional data can be magnetically recorded on APS film thus increasing the amount of data stored.
2. Additional data can be magnetically recorded on APS film without interfering with the performance of previously recorded standard magnetic tracks.
3. Data storage on magnetically coated films, in general, is optimized.

### BRIEF DESCRIPTION OF THE DRAWINGS

Fig. 1 is a diagrammatic view of standard format APS film.

Fig. 2 is a diagrammatic view of APS film incorporating some embodiments of the present invention.

Fig. 3 is a diagrammatic view of APS film incorporating other embodiments of the present invention.

### DETAILED DESCRIPTION OF THE INVENTION

Referring now to Fig. 2, there is diagrammatically shown standard format APS film incorporating some embodiments of the present invention. As shown, an azimuthly recorded magnetic track 30 is located in the space 24 between standard perpendicularly recorded tracks 14 and 16 of frame 18 and an azimuthly recorded magnetic track 32 is located in the space 26 between standard perpendicularly recorded tracks 20 and 22. Tracks 30 and 32 are recorded at an azimuth angle (i.e., the magnetic transitions are recorded at an angle other than 90° to the track length) which will not interfere with the performance of adjacent nonazimuthly recorded tracks (i.e., the magnetic transitions are recorded at a 90° angle to the track length) and which produce acceptably minimal mistracking errors. A further embodiment shown in Fig. 2 shows azimuthly recorded magnetic track 34 overlapping standard track 16' which may be recorded at an azimuth angle. In this case the azimuth angle of track 34 is sufficiently different from the azimuth angle of track 16' that crosstalk is minimized. Azimuthly recorded track 50 is located between track 14 and the upper edge of film 10. Azimuthly recorded track 52 is located between track 22 and the lower edge of film 10.

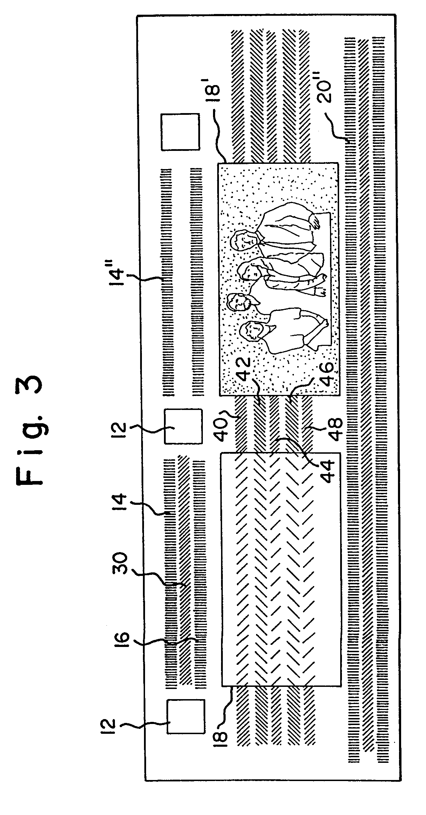

Referring now to Fig. 3, there is shown other embodiments of the present invention. As shown, azimuthly recorded magnetic tracks 40, 42, 44, 46, 48 are recorded in the empty spaces between image frames 18, 18'. Adjacent tracks 40, 42, for example, are recorded at opposite azimuth angles to reduce intertrack crosstalk. Also shown are azimuthly recorded tracks 54, 56, 58, 60, 62 in the image frame area 18. Azimuthly recorded tracks can also be recorded in standard tracks, such as 14" and 20", in lieu of non-azimuthly recorded tracks. Both azimuthly recorded and non-azimuthly recorded tracks can be recorded interchangeably or in combination anywhere on film 10. Moreover, either non-azimuthly recorded or azimuthly recorded tracks can be recorded on film 10 during production of the film cartridge.

It will be appreciated by those skilled in the art that the present invention is applicable to other films having a magnetic layer, such as radiographic film, 35 mm film, etc. In such cases, greater data capacity is achieved by locating azimuthly recorded tracks in regions of the film where there are no non-azimuthly recorded tracks. Both azimuthly recorded and non-azimuthly recorded tracks can be recorded together on the same film. Equipment utilizing the film according to the invention include cameras, photofinishing equipment, scanners, user playback equipment, etc. Such equipment is provided with azimuth and/or non-azimuth magnetic recording and/or playback heads for recording and/or playback of data in the magnetic tracks on the film.

While the invention has been described in detail by specific reference to preferred embodiments thereof, it is understood that other variations and modifications may be made without departing from the spirit and scope of the invention.

### PARTS LIST

- 10: film
- 12: perforation
- 14,16: magnetic track
- 20,22: magnetic track
- 18,18': image frame
- 24,26: space
- 28: magnetic transition
- 30,32,34,40,44,46,48: azimuthly recorded magnetic track

## Claims

1. In a photographic film having a substantially transparent magnetic layer and having spaced image frame areas, the improvement comprising at least one azimuthly recorded magnetic track recorded in said magnetic layer.

2. The improvement of claim 1 including at least one non-azimuthly recorded magnetic track recorded in said magnetic layer in addition to said at least one azimuthly recorded magnetic track.

3. The improvement of claim 1 wherein said at least one azimuthly recorded magnetic track is recorded in an area other than an image area.

4. The improvement of claim 1 wherein said at least one azimuthly recorded magnetic track is recorded at least partially in an image frame area.

5. In a photographic film having a substantially transparent magnetic layer, a sequence of longitudinally spaced image frame areas, first and second spaced longitudinal magnetic tracks in said magnetic layer located on one side of each image frame area, and third and fourth spaced longitudinal magnetic tracks in said magnetic layer located on the other side of each said image frame area, wherein at least one of said magnetic tracks has data non-azimuthly recorded therein the improvement comprising:
at least one azimuthly recorded magnetic track recorded in said magnetic layer in a region other than said non-azimuthly recorded magnetic track

6. The improvement of claim 5 wherein said at least one azimuthly recorded magnetic track is recorded in said magnetic layer between said spaced longitudinal magnetic tracks.

7. The improvement of claim 5 wherein said at least one azimuthly recorded magnetic track is recorded in said magnetic layer between said image frame areas and/or in said image frame areas.

8. The improvement of claim 5 wherein said at least one azimuthly recorded magnetic track is recorded in one of said first, second, third, and fourth magnetic tracks.

9. The improvement of claim 5 wherein said at least one azimuthly recorded track is recorded between one of said magnetic tracks and either an edge of said film or an edge of said image frame area.
